# EUROPÄISCHE PATENTSCHRIFT

(11) **EP 1 341 682 B1**
(45) Veröffentlichungstag und Bekanntmachung des Hinweises auf die Patenterteilung: **20.02.2013**
(21) Anmeldenummer: 01990544.7
(22) Anmeldetag: 11.12.2001
(51) Int. Cl.: B60L 3/00, B60L 11/12

(54) **ELEKTRISCHES ANTRIEBSSYSTEM, INSBESONDERE FÜR FAHRZEUGE**
ELECTRIC DRIVE SYSTEM, ESPECIALLY FOR VEHICLES
SYSTEME D'ENTRAINEMENT ELECTRIQUE, NOTAMMENT POUR DES VEHICULES

(30) Priorität: 11.12.2000 DE 10061659
(43) Veröffentlichungstag der Anmeldung: 10.09.2003
(73) Patentinhaber: Magnet-Motor Gesellschaft für magnetmotorische Technik mbH, D-82319 Starnberg (DE)
(72) Erfinder: EHRHART, Peter, 81375 München (DE); SCHERG, Christof, 82377 Penzberg (DE); WECK, Werner, 82319 Starnberg (DE)
(74) Vertreter: Klunker . Schmitt-Nilson . Hirsch
(86) Internationale Anmeldenummer: PCT/EP2001/014549
(87) Internationale Veröffentlichungsnummer: WO 2002/047935

(56) Entgegenhaltungen:
- EP-A- 1 020 986
- EP-A2- 0 478 288
- DE-A- 19 732 764
- DE-C- 19 624 090
- DE-C1- 19 707 763
- US-A- 4 554 989
- US-A- 5 343 971

## Beschreibung

Die Erfindung betrifft ein elektrisches Antriebssystem, insbesondere für Fahrzeuge. Speziell geht es um ein Antriebssystem mit zwei oder mehr Antriebsmotoren, mindestens einem von einer Verbrennungsmaschine angetriebenen Generator und einer oder mehreren Leistungselektronikeinheiten, die den Antriebsmotoren und dem Generator zugeordnet sind, wobei die Anordnung aus Antriebsmotoren, Generator und Leistungselektronikeinheiten von einer Steuerung entsprechend den Einstellungen/Betätigungen von Bedienelementen gesteuert wird.

Solche elektrischen Antriebssysteme sind bekannt. Die von den zwei oder mehr Antriebsmotoren abgeforderte elektrische Leistung muß von dem Generator bereitgestellt werden. Entsprechend der abgeforderten Leistung muß der den Generator antreibende Verbrennungsmotor gesteuert und geregelt werden. Die dem Generator zugeordnete Leistungselektronikeinheit setzt die von dem Generator gelieferte Wechselspannung in eine Gleichspannung um. Der Ausgang der dem Generator zugeordneten Leistungselektronikeinheit bildet einen Gleichspannungszwischenkreis, aus dem die den Antriebsmotoren zugeordneten Leistungselektronikeinheiten, die als Wechselrichter fungieren, elektrische Leistung entnehmen.

Bei der vorliegenden Erfindung geht es um das Problem der Betriebssicherheit eines solchen elektrischen Antriebssystems: Wenn der Generator eines solchen Antriebssystems ausfällt, entspricht dies dem Gesamtausfall des Antriebssystems. Ähnliches gilt aber auch für den Ausfall eines der mehreren elektrischen Antriebsmotoren zumindest dann, wenn im Fall eines Kettenfahrzeugs der eine Antriebsmotor eine Antriebskette auf der einen Fahrzeugseite antreibt und der andere Motor den Antrieb auf der anderen Fahrzeugseite übernimmt; denn in diesem Fall läßt sich das Fahrzeug praktisch kaum mehr manövrieren.

Um speziell das oben angesprochene Problem zu lösen, gibt es bereits einen Vorschlag, Generator und Antriebsmotoren sowie zu den Antriebsmotoren gehörige elektronischen Leistungselektronikeinheiten jeweils in zwei oder mehr Teileinheiten aufzuteilen und eine Art "Überkreuzverbindung" in dem Sinn vorzusehen, daß bei einer Aufteilung in jeweils zwei Teileinheiten bei einem Kraftfahrzeugantrieb mit getrenntem Antrieb für die linke und für die rechte Fahrzeugseite die beiden Leistungseinheiten auf der linken Seite eine Teilantriebseinheit auf der linken Seite und eine Teilantriebseinheit auf der rechten Seite versorgen, wobei entsprechendes für die andere Fahrzeugseite gilt. Hierdurch wird erreicht, daß beispielsweise im Fall einer Störung einer Teilantriebseinheit auf einer Fahrzeugseite die dort vorhandene, noch intakte Teilantriebseinheit von einer Leistungseinheit der anderen Fahrzeugseite her gespeist wird, so daß durch entsprechende Kompensationsmaßnahmen noch ein Teillastbetrieb des Fahrzeugs möglich ist. Der Generator kann mit den Leistungselektronikeinheiten über getrennte Stromkreise verbunden sein, diese wiederum können jeweils von einem eigenen Generator gespeist werden. Dem Generator bzw. den Generatoren ist dabei keine eigene Leistungselektronikeinheit zugeordnet.

Bei der oben beschriebenen Lösung in Form einer "Überkreuzkopplung" werden die die Antriebseinrichtung speisenden Leistungseinheiten von mehreren Steuereinheiten über Signalbusleitungen angesteuert. Die für die einzelnen Fahrzeugseiten vorgesehenen Kombinationen aus Leistungseinheiten und Motoreinheiten sind von den Steuereinrichtungen nur über die Leistungseinheiten her zugänglich. Eine eindeutige Zuordnung der Teilmotoren zu Teilleistungseinheiten gibt es nicht. Bei Ausfall einer Teilleistungseinheit auf einer Fahrzeugseite mit dem daran direkt angeschlossenen Teilantriebsmotor reagiert die zugehörige Teilleistungseinheit durch Abschalten des mit ihr gekoppelten Teilantriebsmotors auf der anderen Fahrzeugseite. Damit ist zwar durch die "Überkreuzkopplung" eine schnelle Reaktion der Teilleistungseinheiten bei einem Ausfall der jeweils paarweise zugeordneten Teilleistungseinheiten möglich, allerdings ist die Anordnung in ihrer möglichen Flexibilität noch weiter entwickelbar.

Die US 5 343 971 zeigt ein elektrisches Antriebssystem für Fahrzeuge nach dem Oberbegriff des Anspruchs 1, bei welchem Elektromotoren, Generator, Motorsteuereinheiten, Gleichrichter, Bremssteuereinheiten und eine zentrale Steuereinheit jeweils aus mehreren Teileinheiten aufgebaut sind. Die EP 0 478 288 zeigt ein Prozessleitsystem zur Steuerung von Prozessen industrieller verfahrenstechnischer Fertigungsabläufe mit einer Master-Slave-Architektur, bei der ein Slave- Eingabe-/Ausgabeprozessor (IOP) mit Hilfe eines Backup-Slave-Eingabe-/Ausgabeprozessors redundant ausgelegt wird. Hierzu werden im Normalbetrieb, wenn alle Slave-Prozessoren funktionsfähig sind, mehr Steuereinheiten im Netz vorgehalten werden, als sie benötigt werden. Hierdurch soll ermöglicht werden, dass im Falle eines Fehlers eines der Slave-Prozessoren auf einen Backup-Slave-Prozessor umgeschaltet werden kann, um eine möglichst unterbrechungsfreie Funktionsweise zu gewährleisten.

Ziel der vorliegenden Erfindung ist die Schaffung eines elektrischen Antriebssystems der eingangs umrissenen Art, bei dem eine größtmögliche Betriebssicherheit im Fall eines Ausfalls einer oder mehrerer Komponenten erreicht wird.

Zu diesem Zweck schafft die vorliegende Erfindung ein Antriebssystem insbesondere für Fahrzeuge, mit den Merkmalen des Anspruchs 1.

Dieses elektrische Antriebssystem gemäß der Erfindung macht konsequenten Gebrauch von dem von der Anmelderin entwickelten sog. multiplen Prinzip, d. h. die Aufspaltung der Antriebsmotoren, des Generators und der Leistungselektronikeinheiten in jeweilige Teilelemente, wobei jeweils erste Teilelemente, d. h. z. B. die erste Teilgeneratorleistungseinheit, eine erste Teilmotorleistungseinheit für den ersten Motor und eine erste Teilmotorleistungseinheit für den zweiten Motor, einen ersten Antriebskreis bilden. Jeder Antriebskreis besteht damit aus mehreren Teilmotoren, einem Teilgenerator und einer jeweils zugehörigen Teil-Leistungselektronikeinheit, denen jeweils ein Gleichspannungszwischenkreis - zwischen Teilgenerator und den Teilmotoren bzw. den diesen Komponenten zugeordneten Teilleistungelektronikeinheiten - zugeordnet ist.

Die Verbindung der Systemsteuereinheiten mit den Antriebsmotoren, dem Generator und/oder den Leistungselektronikeinheiten kann entweder direkt von der jeweiligen Systemsteuereinheit zu den Antriebsmotoren, dem Generator und/oder den einzelnen Leistungselektronikeinheiten erfolgen, möglich ist aber auch die Variante, die Steuerleitungen von den Systemsteuereinheiten zu den Leistungselektronikeinheiten zu führen und von diesen aus die Leitungen weiter zu den Antriebsmotoren bzw. dem Generator zu führen. Als weitere mögliche Alternative für die Verbindung der Systemsteuereinheiten mit den Antriebsmotoren etc. läßt sich ein Bus-System einsetzen, wie es dem Fachmann aus zahlreichen anderen Anwendungsgebieten bekannt ist.

In einer Weiterbildung der Aufspaltung des Generators in Teilgeneratoren können auch voneinander getrennte Generatoren mit jeweils eigenem Antrieb durch eine Verbrennungskraftmaschine vorgesehen werden.

Ebenso können auch mehrere Verbrennungsmotoren mit jeweils zugeordneten Generatoren (Mehrmotorenkonzept) den Antriebskreisen zugeordnet sein. Zusammen mit ihren zugehörigen Leistungselektronikeinheiten arbeiten diese Generatoren dann als Teilgeneratoren in benanntem Sinn.

In einer ersten Variante der Erfindung (Merkmal h1) wird die oben angesprochene Aufteilung in einzelne Antriebskreise konsequent fortgesetzt auf die Systemsteuereinheiten, d. h. jedem Antriebskreis ist speziell eine Systemsteuereinheit zugeordnet. Da diese **Systemsteuereinheiten untereinander** über einen Informationsaustauschkanal verbunden sind, ist das System - was die Systemsteuereinheiten angeht - gegen den Ausfall von einer oder mehreren Systemsteuereinheiten gesichert, soweit mindestens eine Systemsteuereinheit betriebsfähig bleibt. Durch das Erkennen eines Ausfalls einer oder mehrerer Antriebskreise kann die dem noch intakten Antriebskreis bzw. können die den noch intakten Antriebskreisen zugeordnete(n) Systemsteuereinheit(en) auf den Ausfall reagieren und die verbleibenden Komponenten des Antriebssystems entsprechend steuern.

In einer zweiten Variante das Systems (Merkmal h2) sind die Systemsteuereinheiten sämtlichen Antriebskreisen zugeordnet. Hierdurch ergibt sich die Situation, daß jede Systemsteuereinheit für jeden vorhandenen Antriebskreis eine gleichwertige Steuereinheit darstellt. Zudem wird gegenüber der oben geschilderten ersten Variante der Spielraum bei dem Verhältnis der Anzahl von Systemsteuereinheiten zur Anzahl von vorhandenen Antriebskreisen größer. Es können also mit Hilfe von zwei Steuereinheiten drei separate Antriebskreise versorgt werden, es können aber auch drei oder vier Systemsteuereinheiten für zwei separate Antriebskreise vorhanden sein.

Von besonderer Bedeutung ist auch der Informationsaustauschkanal zwischen den Systemsteuereinheiten in Verbindung mit der Detektoreinrichtung zum Erkennen des Betriebszustands der Antriebskreise. Wird der vollständige oder teilweise Ausfall eines oder mehrerer Antriebskreise erkannt, so wird diese Information zwischen den Systemsteuereinheiten (soweit funktionsfähig) ausgetauscht, so daß rasch eine Kompensation der ausgefallenen Teile vorgenommen werden kann.

In einer speziellen Ausführungsform der Erfindung (Merkmal h2') weisen die Antriebskreise jeweils mehrere Eingangskanäle auf, von denen jeder mit einer anderen Systemsteuereinheit, z. B. über eine Busleitung, verbunden ist. Hierdurch hat jede Systemsteuereinheit Kenntnis der Betriebszustände in jedem Antriebskreis. Alternativ (Merkmal h2") weisen die Systemsteuereinheiten jeweils mehrere Steuerungskanäle auf, deren Anzahl derjenigen der Antriebskreise entspricht, welche ihrerseits Steuerungskanäle in einer Anzahl gleich der der Systemsteuereinheiten aufweisen, wobei je ein Steuerungskanal der ersten, der zweiten usw. Systemsteuereinheit mit je einem Steuerungskanal der Antriebskreise verbunden ist. Diese Variante mit einer Mehrzahl von getrennten Kanälen (im Gegensatz zu etwa einem Busleitungssystem) hat den Vorteil einer erhöhten Sicherheit gegenüber Störungen in den Signalübertragungskanälen. Während bei der Störung einer Busleitung die dazugehörige Systemsteuereinheit möglicherweise von sämtlichen Antriebskreisen abgekoppelt ist, ist bei der mehrkanaligen Ausführung im Fall der Störung eines Kanals noch eine Verbindung über die verbleibenden Kanäle vorhanden.

In einer speziellen Ausgestaltung der Erfindung ist vorgesehen, daß die Systemsteuereinheiten eine symmetrische Betriebsweise in den einzelnen elektrischen Antriebskreisen, d.h. den Motoren und dem Generator sowie in den Leistungselektronikeinheiten einregeln. Der Begriff "symmetrische Betriebsweise" bedeutet hier, daß sämtliche Teileinheiten, d. h. die Teilgeneratoreinheiten, die Teilmotoreinheiten jedes Motors und die entsprechenden Teilleistungselektronikeinheiten, jeweils gleichmäßig belastet sind.

Alternativ zu dieser gleichmäßigen Belastung der Teileinheiten besteht eine Weiterbildung der Erfindung darin, daß die Systemsteuerungseinheiten die Antriebskreise derart steuern, daß jeder Antriebskreis für einen definierten Teil der Gesamtleistung zuständig ist und einzelne Antriebskreise entsprechend der geforderten Leistung sukzessive ab- und zugeschaltet werden. Diese alternative Ausgestaltung hat gegenüber der symmetrischen Betriebsweise Vorteile, wie folgendes Beispiel zeigt: Bei einer Gesamtleistung von beispielsweise 600 kW des Antriebssystems und bei insgesamt drei Antriebskreisen kann von diesen drei Antriebskreisen der erste 0-200 kW, der zweite Antriebskreis 200-400 kW und der dritte Antriebskreis 400-600 kW bedienen. Im unteren Leistungsbereich zwischen 0 und 200 kW können der zweite und der dritte Antriebskreis, beim Betrieb im mittleren Leistungsbereich kann der dritte Antriebskreis völlig abgeschaltet werden. Völlige Abschaltung bedeutet, daß keinerlei Grundverluste entstehen, die bei Betrieb eines Antriebskreises in dessen unterem Leistungsbereich eine erhebliche Verschlechterung des Wirkungsgrads bedingen.

Die oben beschriebene Betriebsweise der einzelnen Antriebskreise je nach angeforderter Gesamtleistung kann bei starrer Zuordnung der einzelnen Antriebskreise zu den verschiedenen Leistungsbereichen des Gesamtsystems zu einer erheblichen Ungleichverteilung der Belastung der einzelnen Antriebskreise führen. Bei diesem starren System wird nämlich der für den unteren Leistungsbereich zuständige Antriebskreis im Betrieb immer beansprucht, der für den mittleren Leistungsbereich zuständige Antriebskreis wird mittelmäßig beansprucht, der für den oberen Leistungsbereich zuständige Antriebskreis wird nur relativ selten beansprucht.

Um eine weitestgehend gleichmäßige Belastung der einzelnen Antriebskreise im mittel- und langfristigen Zeitrahmen zu erreichen, ist in einer speziellen Ausgestaltung deshalb vorgesehen, daß die Systemsteuereinheiten die Zuordnung der Antriebskreise zu dem zugehörigen Teil der Gesamtleistung in einem zeitlichen Muster durchpermutieren. Durch dieses Durchtauschen der Antriebskreise durch die verschiedenen Bereiche der Leistungszuordnung wird erreicht, daß im Gegensatz zur starren Zuordnung der dem unteren Leistungsbereich zugeordnete Antriebskreis nicht dauernd beansprucht ist, sondern im Durchschnitt etwa 33 % der gesamten Betriebszeit.

In einer bevorzugten Ausgestaltung sind den Antriebskreisen elektrische Einrichtungen zur Aufnahme elektrischer Energie zugeordnet, insbesondere sind diese elektrischen Einrichtungen Bremseinrichtungen, welche den einzelnen Teilelektronikeinheiten der Antriebsmotoren zugeordnet sind.

Die Antriebsmotoren können mittels der zugeordneten Leistungselektronikeinheiten auch als Bremsgeneratoren arbeiten und zur Abbremsung des entsprechend ausgestatteten Fahrzeugs verwendet werden. Dabei werden in die einzelnen Antriebskreise geeignete elektrische Einrichtungen zur Aufnahme der elektrischen Energie (Bremselektronik und Bremswiderstände oder ein elektrischer Energiespeicher) geschaltet. Besonders bevorzugt ist es, die elektrischen Bremseinrichtungen direkt den Teilelektronikeinheiten der Antriebsmotoren zuzuordnen, um damit die Betriebssicherheit und Zuverlässigkeit der elektrischen Bremseinrichtungen bei Systemfehlern zu erhöhen.

In einer speziellen Ausgestaltung hiervon sind die genannte Bremselektronik bzw. Bremseinrichtungen mit den Leistungselektronikeinheiten oder den Teilelektronikeinheiten in einem gemeinsamen Gehäuse untergebracht.

In einer Weiterbildung der Erfindung greifen die übergeordneten Systemsteuereinheiten in die Steuerung und Regelung des Verbrennungsmotors ein. Dies hat den wichtigen Vorteil, daß der Betrieb des Verbrennungsmotors an jeweilige Betriebserfordernisse und auch an spezielle Betriebsstrategien angepaßt werden kann.

Bei mehreren Verbrennungsmotoren erfolgt der Zugriff der Systemsteuereinheiten gleichzeitig auf alle Motoren. Dabei gelten die genannten Steuerungskriterien bezüglich der Antriebskreise entsprechend. Durch die Verbindung der übergeordneten Systemsteuereinheiten mittels Informationsaustauschkanal bietet sich die Möglichkeit, daß sich die Systemsteuereinheiten untereinander koordinieren in dem Sinne, daß sie die Antriebskreise so ausregeln, daß an sämtlichen Antriebsmotoren bzw. Teilantriebsmotoren eine definierte Leistungs-/Drehmomentvorgabe anliegt. Speziell kann dies darauf hinauslaufen, daß von den Systemsteuereinheiten eine definierte Überlagerungsleistung bzw. ein definiertes Überlagerungsdrehmoment auf einen oder mehrere Antriebs- oder Teilantriebsmotoren vorgegeben wird. Eine solche Steuerung ist dann von besonderem Interesse, wenn die Lenkung eines Fahrzeugs unterstützt bzw. ausschließlich dadurch, wie beispielsweise bei einem Kettenfahrzeug, realisiert werden soll. Abgesehen von der "normalen" Radlenkung erfolgt eine Unterstützung durch eine sog. Radseitenlenkung, das ist die unterstützende Erzeugung von Zusatzdrehmomenten bzw. Zusatzleistung an dem äußeren Rad bzw. an den äußeren Rädern des Fahrzeugs bei Kurvenfahrt.

Besonders günstig ist die Koordination der Antriebskreise, die bevorzugt bei einem Fahrzeug der linken bzw. der rechten Fahrzeugseite zugeordnet sind, wenn die Systemsteuereinheiten von den Antriebsmotoren bzw. den den Antriebsmotoren zugeordneten Leistungselektronikeinheiten Rückmeldeinformation über die tatsächlich abgegebenen Leistungen/Drehmomente erhalten, um diese bei der Regelung zu verarbeiten.

Wenn das elektrische Antriebssystem gemäß der Erfindung für eine gegebene Gesamtleistung ausgelegt ist, so kann man die einzelnen Antriebskreise bei gegebener Anzahl von Antriebskreisen für einen entsprechenden Bruchteil der Gesamtleistung auslegen. Bevorzugt wird jedoch erfindungsgemäß, wenn die anteilige Leistung jedes einzelnen Antriebskreises so weit erhöht ist, daß bei Ausfall eines Antriebskreises dieser Ausfall zumindest teilweise durch die verbleibenden Antriebskreise kompensiert werden kann.

Betrachtet man den hier bevorzugten Einsatz des erfindungsgemäßen elektrischen Antriebssystems bei einem Fahrzeug, so sollen erfingdungsgemäß auch Nebenverbraucher berücksichtigt werden, wobei unter dem Begriff Nebenverbraucher alle elektrischen Verbraucher außer den Antriebsmotoren verstanden werden. Üblicherweise werden in einem Fahrzeug die elektrischen Nebenverbraucher über das normale Bordnetz (Batterie) gespeist. Bei bestimmten Nebenverbrauchern ergeben sich aber Vorteile, wenn diese nicht über das übliche Bordnetz gespeist werden, sondern über einen oder mehrere Antriebskreise des erfindungsgemäßen elektrischen Antriebssystems, d. h. über einen oder mehrere Gleichspannungszwischenkreise des Antriebssystems. Die dort abgreifbare, gegenüber der Spannung des üblichen Bordnetzes erhöhte Spannung ist für geeignete elektrische Nebenverbraucher günstiger; denn man kann diese dann für die höhere Spannung auslegen und sie mit dieser erhöhten Spannung versorgen. Als Beispiel sei auf Kühlmittelpumpen, Lüfter etc. hingewiesen.

Um die oben angesprochenen geeigneten elektrischen Nebenverbraucher gegen möglichen Ausfall zu sichern, sieht die Erfindung in einer speziellen Ausgestaltung vor, daß die Nebenverbraucher wahlweise auf einen der vorhandenen Antriebskreise geschaltet werden.

In einer Weiterbildung ist vorgesehen, daß die Antriebskreise versorgungsseitig zusammengeschaltet werden, d.h. daß die Stromleitungen zwischen den Teilelektronikeinheiten zusammengeschaltet werden. Dies bedeutet, daß die Ausgänge der Teilelektronikeinheiten des Generators parallel geschaltet werden und nur noch eine gemeinsame Versorgung besteht.

In einer anderen Ausgestaltung der Erfindung ist vorgesehen, daß den einzelnen Antriebskreisen zugeordnete und versorgungsseitig eingebundene elektrische, Energie speichernde Primär-/Sekundärelemente vorgesehen sind. Die elektrischen Elemente werden direkt oder ggfs. über einzeln zugeordnete Umrichter, z.B. DC/DC-Wandler, auf die **Versorgungsseite** der Leistungselektronik- bzw. Teilleistungselektronikeinheit geschaltet. Mit ihnen kann zum einen ein elektrischer Hybridantrieb des entsprechend ausgestatteten Fahrzeugs realisiert werden, zum anderen können mit Hilfe der elektrischen Elemente die vorgenannten Kompensationsmaßnahmen bei Ausfall einzelner Antriebskreise unterstützt werden. Zu den elektrischen Primärelementen, d.h. Elementen, die nur entladen werden können, zählen z.B. Brennstoffzellen, nicht-rückspeisefähige Oberleitungen und Primärbatterien; zu den elektrischen Sekundärelementen, d.h. Elementen, die Energie aufnehmen und abnehmen können, zählen z.B. der magnetodynamische Speicher MDS, Sekundär-Fahrbatterien und rückspeisefähige Oberleitungen. Dabei können die Fahrbatterien nach wie vor den einzelnen Antriebskreisen zugeordnet bleiben, bevorzugt ist es dann jedoch, nur eine zentrale Fahrbatterie vorzusehen, wodurch dann die Antriebskreise versorgungsseitig zusammengeschaltet sind.

Bei versorgungsseitig zusammengeschalteten Antriebskreisen besteht die bevorzugte Möglichkeit, daß die elektrischen Bremseinrichtungen nach wie vor den einzelnen Antriebskreisen zugeordnet bleiben und unabhängig, d.h. dem jeweiligen Antriebskreis zugeordnet, betrieben werden. Durch diese Aufteilung, nämlich eine gemeinsame Versorgung der Antriebskreise, aber eine unveränderte Aufteilung der Bremseinrichtungen (z.B. Bremssteller-Leistungselektroniken mit zugeordneten Widerständen) auf die einzelnen Antriebskreise kann bei solcher Art ausgestatteten Fahrzeugen eine besonders hohe Sicherheit der elektrischen Bremsfunktion erreicht werden, wenn gleichzeitig die Antriebs- und damit die Überlagerungs-Lenkfunktion weniger kritisch ist. Dies ist z.B. bei Landfahrzeugen mit mehreren elektrisch angetriebenen Einzelrädern der Fall.

Alternativ kann man geeignete elektrisch betriebene Nebenverbraucher auf versorgungsseitig zusammengeschaltete Antriebskreise schalten.

In einer weiteren Ausgestaltung der Erfindung ist vorgesehen, daß jede Systemsteuereinheit direkte Informationsverbindungen zu den Steuerungsverbindungen zwischen allen anderen Systemsteuereinheiten und den Leistungselektronikeinheiten, den Motoren und dem (den) Generator(en) aufweist und bei Ausfall einer oder mehrerer Systemsteuereinheiten deren Aufgaben übernimmt. Gemäß dieser Weiterbildung übernimmt bei Ausfall einer oder mehrerer Systemsteuereinheiten eine der noch intakten Systemsteuereinheiten direkt die Aufgabe der ausgefallenen Systemsteuereinheit oder Systemsteuereinheiten, also unabhängig von dem Zustand der an die Systemsteuereinheiten angeschlossenen Antriebskreise.

Insbesondere für Fahrzeuge, bei denen ein hohes Drehmoment- und Leistungsvermögen gefordert ist, eignen sich bevorzugt Antriebsmotoren und/oder Generatoren mit dauermagnetischer Erregung des Läufers, wobei in einer speziellen Ausgestaltung dieser Läufer mit Flußkonzentration der Dauermagnete und der magnetischen Flußleitteile aufgebaut ist.

Im folgenden werden Ausführungsbeispiele der Erfindung anhand der Zeichnungen näher erläutert. Es zeigen:
- Fig. 1: ein schematisches Blockschaltbild einer elektrischen Antriebseinheit für ein Fahrzeug gemäß einer Ausführungsform der Erfindung,
- Fig. 2: ein schematisches Blockschaltbild einer zweiten, alternativen Ausführungsform eines elektrischen Antriebssystems gemäß der Erfindung; und
- Fig. 3: eine gegenüber der Ausführungsform nach Fig. 2 alternative Ausgestaltung der Verbindung zwischen den Systemsteuereinheiten und den Antriebskreisen gemäß einer dritten Ausführungsform der Erfindung.

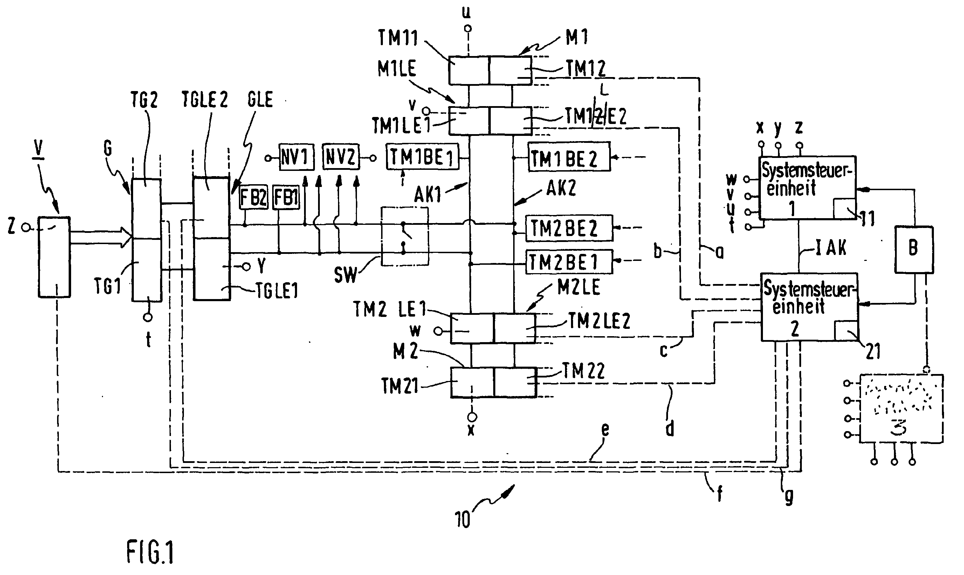

Das in Fig. 1 allgemein mit 1 bezeichnete elektrische Antriebssystem eignet sich besonders für Fahrzeuge mit jeweils für die linke und die rechte Fahrzeugseite getrennt ausgelegtem Elektromotorantrieb, allerdings ist die Erfindung auch auf andere elektrische Antriebssysteme anwendbar, wie dem Fachmann bei der Lektüre der vorliegenden Erfindungsbeschreibung klar wird.

Von links in Fig. 1 beginnend, enthält das Antriebssystem einen Verbrennungsmotor V, der einen elektrischen Generator G über eine hier schematisch durch einen Pfeil angedeutete Antriebswelle antreibt. Der elektrische Generator G ist - ebenso wie die weiter unten noch angesprochenen Antriebsmotoren - als elektrische Maschine mit Dauermagnet-Läufer ausgeführt und enthält Flußkonzentration für Dauermagnete und der Teile, die zum Leiten des magnetischen Flusses dienen.

Der elektrische Generator G ist in zwei Teilgeneratoren TG1 und TG2 aufgeteilt, von denen jeder bei einer elektrischen Gesamtleistung von z. B. 600 kW des Generators G 50% Leistung liefert, d. h. jeder Teilgenerator TG1 und TG2 liefert 300 kW.

Die elektrischen Ausgangsleitungen der Teilgeneratoren TG1 und TG2 sind an eine Generator-Leistungselektronikeinheit GLE gekoppelt, und zwar jeweils zugeordnet an eine Teilgenerator-Leistungselektronikeinheit TGLE1 bzw. eine Teilgenerator-Leistungselektronikeinheit TGLE2. Deren Ausgänge erzeugen einen leistungsfähigen Gleichspannungspegel, bilden also jeweils einen Gleichspannungszwischenkreis, aus dem elektrische Leistung für zwei Antriebsmotoren M1 und M2 entnommen wird. Oben in Fig. 1 ist ein elektrischer Antriebsmotor M1 dargestellt, jeweils gebildet durch zwei Teilmotoren TM11 und TM12, denen jeweils eine Teilmotor-Leistungselektronikeinheit TM1LE1 bzw. TM1LE2 zugeordnet ist, welche zu einer Motorleistungselektronikeinheit M1LE für den Motor M1 zusammengefaßt sind.

Teilmotor- und Teilgenerator-Leistungselektronikeinheiten werden verkürzt auch als Teilelektronikeinheiten bezeichnet.

Unten in Fig. 1 erkennt man die Aufteilung des Motors M2 in zwei Teilmotoren TM21 und TM22, denen Teilmotor-Leistungselektronikeinheiten TM2LE1 und TM2LE2 zugeordnet sind, die Bestandteil einer Motorleistungselektronikeinheit M2LE sind.

Bei sämtlichen oben angesprochenen Teileinheiten des Generators, der Generatorleistungselektronikeinheit, der Motoren M1 und M2 und der Motorleistungselektronikeinheiten M1LE und M2LE sind durch angedeutete gestrichelte Linien theoretisch weitere Teileinheiten angeschlossen bzw. anschließbar. Bei gleicher Gesamtleistung des Antriebs würden dann z. B. drei Teileinheiten für jeweils nur ein Drittel der Gesamtleistung ausgelegt sein.

Des weiteren sind den Teilleistungselektronikeinheiten Teilbremseinrichtungen TM1BE1, TM1BE2, TM2BE1 und TM2BE2 zugeordnet.

Die Teilgeneratoren TG1 und TG2, und die Teilgenerator-Leistungselektronikeinheiten TGLE1 und TGLE2 bilden zusammen mit den zugehörigen Motorelementen einen Antriebskreis AK1 bzw. AK2. Sämtliche Teileinheiten mit der Endziffer "1" gehören zu dem Antriebskreis 1, sämtliche Teileinheiten mit der Endziffer "2" gehören zu dem Antriebskreis 2.

Auf der rechten Seite in Fig. 1 sind zwei Systemsteuereinheiten 1 und 2 dargestellt. Im folgenden soll zunächst auf die Verbindung der einzelnen Komponenten des Antriebssystems 2 mit der Systemsteuereinheit 2 eingegangen werden.

Gestrichelte Steuerleitungen a, b, ... g führen von der Systemsteuereinheit 2 zu den oben angesprochenen Komponenten des Antriebssystems. Eine Signalleitung a führt von der Systemsteuereinheit 2 zu dem Teilmotor TM12, eine Steuerleitung b führt zu der Teilmotor-Leistungselektronikeinheit TM1LE2, eine Signalleitung c führt zu der Teilmotor-Leistungselektronikeinheit TM2LE2, eine Signalleitung d führt zu dem Teilmotor TM22, eine Signalleitung e führt zu der Teilgenerator-Leistungselektronikeinheit TGLE2, und eine Signalleitung f führt zu dem Verbrennungsmotor V, um diesen Verbrennungsmotor zu steuern und zu regeln. Eine Signalleitung g führt zum Teilgenerator TG2.

Über die erwähnten Signalleitungen oder über nicht dargestellte separate Signalleitungen erhält die Systemsteuereinheit 2 Rückmeldungen von den einzelnen Einheiten, insbesondere Information über deren Betriebszustand (ordnungsgemäßer Betrieb, Drehzahlen, Ströme, Temperaturen, Störung, Teilstörung etc.).

Die rechts oben in Fig. 1 dargestellte Systemsteuereinheit 1 ist ebenfalls mit dem Verbrennungsmotor V sowie der entsprechenden Teileinheit des Generators G und des Motors M1 und M2 sowie den dazugehörigen Leistungselektronikeinheiten verbunden. Um die Zeichnung nicht zu überlasten, sind an den Komponenten jeweils Steueranschlüsse dargestellt, die zu entsprechend mit t, u, v, ... z bezeichneten Steueranschlüssen an der Systemsteuereinheit 1 über nicht dargestellte Leitungen verbunden sind.

Der Vollständigkeit halber ist zu erwähnen, daß die Steuer- und Signalleitungen zusammengehöriger Teilmaschinen und Teilelektroniken in einer gemeinsamen Leitung zusammengefaßt werden können, sie können z.B. als Bus-Leitung ausgeführt werden.

Damit ist die Systemsteuereinheit 1 dem Antriebskreis AK1 zugeordnet, die Systemsteuereinheit 2 ist dem Antriebskreis AK2 zugeordnet.

Bezüglich der oben angesprochenen alternativen Variante, drei oder vier oder noch mehr Teileinheiten anstelle der lediglich zwei Teileinheiten in dem Antriebssystem 1 zu verwenden, ist rechts in Fig. 1 gestrichelt noch eine für einen dritten Antriebskreis vorgesehene Systemsteuereinheit 3 angedeutet.

Sämtliche Systemsteuereinheiten enthalten eine Detektorschaltung 11 bzw. 21, die anhand der zu der betreffenden Systemsteuereinheit zurückgemeldeten Zustandssignale den Betriebszustand der angeschlossenen Einheiten erkennt. Von einer Bedienelementeinheit B werden z. B. Fahrsignale (Geschwindigkeit, Bremsen etc.) an die Systemsteuereinheiten gegeben, welche dann die Bediensignale in entsprechende Steuersignale für die Teileinheiten des Generators, der Antriebsmotoren, der Leistungselektronikeinheiten und ggf. des Verbrennungsmotors umsetzen.

Die Systemsteuereinheiten 1 und 2 sind über einen Informationsaustauschkanal IAK untereinander verbunden. Es erfolgt ein dauernder Informationsaustausch zwischen den Systemsteuereinheiten in beiden Richtungen. Bei Ausfall der einen Systemsteuereinheit kann die noch intakte Systemsteuereinheit deren Aufgabe mit übernehmen und/oder Kompensationsmaßnahmen durch entsprechende Ansteuerung der ihrem Antriebskreis zugeordneten Elemente vornehmen.

An den jeweiligen Gleichspannungszwischenkreis der Antriebskreise AK1 und AK2 können Fahrbatterien FB1 und FB2 als Primär- bzw. Sekundärelemente und geeignete Nebenverbraucher angeschlossen sein, beispielsweise eine Kühlmittelpumpe, ein Gebläse oder dergleichen. Solche Nebenverbraucher sind hier schematisch bei NV1 und NV2 dargestellt. Gespeist werden sie jeweils alternativ aus dem Gleichspannungszwischenkreis des Antriebskreises AK1 oder AK2.

Eine zusätzliche oder alternative Möglichkeit der elektrischen Versorgung ist das Zusammenschalten der Gleichspannungszwischenkreise, hier durch einen symbolischen Schalter SW angedeutet.

Bei der Ausführungsform nach Fig. 1 ist jedem Antriebskreis AK1, AK2, ... eine Systemsteuereinheit 1, 2, ... zugeordnet. Die beiden **Systemsteuereinheiten** 1 und 2 sind über einen Informationsaustauschkanal IAK verbunden. Bei weiteren Systemsteuereinheiten sind ggf. sämtliche Systemsteuereinheiten untereinander verbunden.

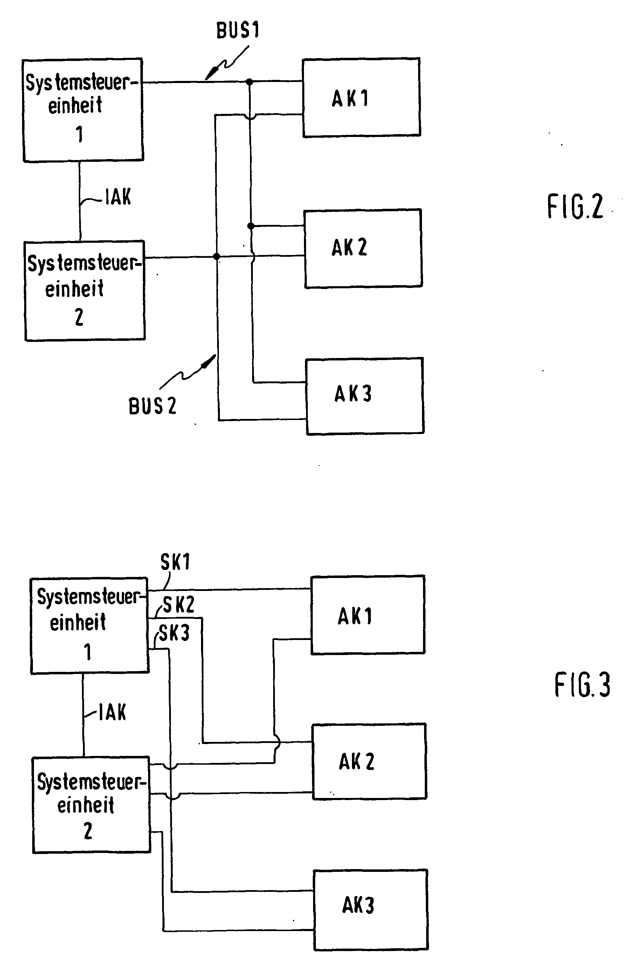

Fig. 2 zeigt eine alternative Ausführungsform, bei der insgesamt drei Antriebskreise AK1, AK2 und AK3 vorhanden sind. An zwei Systemsteuereinheiten 1 und 2 sind über einen BUS 1 bzw. einen BUS2 sämtliche Antriebskreise AK1, AK2 und AK3 einkanalig angeschlossen. Wenn bei der Ausführungsform nach Fig. 2 z. B. die Busleitung BUS1 in der Nähe der Systemsteuereinheit 1 gestört wird, können die Antriebskreise AK1, AK2 und AK3 dann ausschließlich von der Systemsteuereinheit 2 versorgt werden, da diese entsprechende Information über den Informationsaustauschkanal IAK empfängt. Entsprechendes gilt bei einer Störung der Systemsteuereinheit 1 selbst. Hierzu ist in nicht näher dargestellter Weise eine direkte Verbindung der Systemsteuereinheit 2 über den Informationsaustauschkanal IAK mit dem BUS1 vorgesehen.

Bei einer Störung der Sammelleitung BUS1 in Fig. 2 in der Nähe der Systemsteuereinheit 1 würde die Systemsteuereinheit 2 die Gesamtversorgung der Antriebskreise über die Leitung BUS2 übernehmen. Eine bezüglich Störung in den Verbindungsleitungen günstigere Alternative ist die dritte Ausführungsform der Erfindung gemäß Fig. 3. Hier sind insgesamt drei Signalausgangskanäle SK1, SK2 und SK3 der Systemsteuereinheit 1 vorhanden, wobei jeweils ein Kanal für einen Antriebskreis AK1, AK2 bzw. AK3 vorgesehen ist. Die Systemsteuereinheit 2 ist über hier nicht näher bezeichnete getrennte Kanäle ebenfalls mit jedem der Antriebskreise AK1, AK2 und AK3 verbunden. Fällt z. B. der Kanal SK1 aus, so ist hiervon nur die Verbindung zwischen der Systemsteuereinheit 1 und dem Antriebskreis AK1 betroffen, die Systemsteuereinheit 1 kann aber weiterhin noch die beiden Antriebskreise AK2 und AK3 versorgen, die Systemsteuereinheit 2 kann sämtliche Antriebskreise versorgen.

## Patentansprüche

1. Elektrisches Antriebssystem, insbesondere für Fahrzeuge, umfassend die Merkmale :
a) mindestens zwei Antriebsmotoren (M1, M2) sind jeweils in mindestens zwei Teilmotoren (TM11, TM12; TM21, TM22) unterteilt;
b) mindestens ein von einer Verbrennungsmaschine (V) angetriebener Generator (G) ist in mindestens zwei Teilgeneratoren (TG1, TG2) unterteilt;
c) den Antriebsmotoren (M1, M2) und dem Generator (G) ist jeweils eine Leistungselektronikeinheit (M1LE, M2LE, GLE) zugeordnet, die ihrerseits in mindestens zwei unabhängige Teilelektronikeinheiten, also eine erste, eine zweite usw. Teilelektronikeinheit (TM1LE1, TM1LE2;TM2LE1, TM2LE2;TGLE1, TGLE2) unterteilt ist;
d) es sind mindestens zwei übergeordnete Systemsteuereinheiten (1, 2) vorhanden;
e) mit den Systemsteuereinheiten (1, 2) sind Bedienelemente (B) verbunden;
f) die unabhängigen Teilelektronikeinheiten (TM1LE1, TM1LE2;TM2LE1, TM2LE2;TGLE1, TGLE2) sind jeweils in einer 1:1-Entsprechung den Teilmotoren (TM11, TM12; TM21, TM22) und den Teilgeneratoren (TG1, TG2) zugeordnet;
g) die erste, die zweite usw. Teilelektronikeinheit der Antriebsmotoren und des Generators sind jeweils zur Bildung eines ersten, eines zweiten usw. Antriebskreises (AK1, AK2, AK3) verbunden,
g1) wobei zu jedem Antriebskreis AK1, AK2, AK3) mehrere Teilmotoren (TM11, TM21, TM12, TM22) ein Teilgenerator (TG1, TG2) und eine jeweils zugehörige Teilelektronikeinheit (TM1LE1, TM2LE1, TM1LE2, TM2LE2, TGLE1, TGLE2) und
g2) wobei die Systemsteuereinheiten (1,2) über Steuerleitungen (a-g, t- z) oder über ein Bus-System mit den Antriebskreisen (AK1, AK2, AK3) verbunden sind;
**dadurch gekennzeichnet, dass**
h2) die Systemsteuereinheiten (1,2) sämtlichen Antriebskreisen (AK1, AK2, AK3) zugeordnet sind;
i) die Systemsteuereinheiten (1, 2) untereinander über einen Informationsaustauschkanal (IAK) verbunden sind und eine Detektoreinrichtung (11, 21) zum Erkennen eines Ausfalls eines oder mehrerer der Antriebskreise (AK1, AK2, AK3) enthalten;
k) die Systemsteuereinheiten (1, 2) jeweils direkte Informationsverbindungen zu den Steuerungsverbindungen zwischen allen anderen Systemsteuereinheiten (1,2) einerseits und den Antriebskreisen (AK1, AK2; AK3) andererseits aufweisen und bei Ausfall einer oder mehrerer Systemsteuereinheiten (1, 2) deren Aufgaben mit übernehmen, und
l) die Antriebskreise (AK1, AK2, AK3) bei gegebener Anzahl von Antriebskreisen für einen entsprechenden Bruchteil der Gesamtleistung ausgelegt sind, derart dass der Ausfall eines Antriebskreises (AK1, AK2, AK3) zumindest teilweise kompensiert werden kann.

2. System nach Anspruch 1, **dadurch gekennzeichnet, dass** die Antriebskreise (AK1, AK2, AK3) jeweils mehrere Eingangskanäle aufweisen von denen jeder mit einer anderen Systemsteuereinheit (1, 2), z. B. über eine Busleitung (BUS1, BUS2), verbunden ist.

3. System nach Anspruch 1, **dadurch gekennzeichnet, dass** die übergeordneten Systemsteuereinheiten weisen mehrere Steuerkanäle (SK1, SK2, SK3) aufweisen deren Anzahl derjenigen der Antriebskreise (AK1, AK2, AK3) entspricht, die ihrerseits Steuerkanäle mit einer Anzahl gleich der der Systemsteuereinheiten aufweisen, wobei je ein Steuerkanal der ersten, der zweiten usw. Systemsteuereinheit mit je einem Steuerkanal der Antriebskreise verbunden ist.

4. System nach einem der Ansprüche 1 bis 3, **dadurch gekennzeichnet, dass** die übergeordneten Systemsteuereinheiten (1, 2) eine symmetrische Betriebsweise, bei der die Teilgeneratoren (TG1, TG2), die Teilmotoren (TM11, TM12; TM21, TM22) jedes Antriebsmotors (M1, M2) und die entsprechenden Teilelektronikeinheiten (TM1LE1, TM1LE2, TM2LE1, TM2LE2, TGLE1, TGLE2) jeweils gleichmäßig belastet sind, innerhalb der einzelnen Antriebskreise (AK1, AK2, AK3) einregeln.

5. System nach einem der Ansprüche 1 bis 3, **dadurch gekennzeichnet, dass** die Systemsteuereinheiten die Antriebskreise (AK1, AK2, AK3) so steuern, dass jeder Antriebskreis (AK1, AK2, AK3) für einen definierten Teil der Gesamtleistung zuständig ist und einzelne Antriebskreise entsprechend der geforderten Leistung sukzessive ab-und zugeschaltet werden.

6. System nach Anspruch 5, **dadurch gekennzeichnet, dass** die Systemsteuereinheiten (1, 2) die Zuordnung der Antriebskreise (AK1, AK2, AK3) zum zugehörigen Teil der Gesamtleistung in einem zeitlichen Muster durchpermutieren.

7. System nach einem der Ansprüche 1 bis 6, **dadurch gekennzeichnet, dass** den Antriebskreisen (AK1, AK2, AK3) elektrische Einrichtungen (TMBE1, TM1BE2, TM2BE1, TM2BE2) zur Aufnahme elektrischer Energie zugeordnet sind.

8. System nach Anspruch 7, **dadurch gekennzeichnet, dass** die elektrischen Einrichtungen Bremseinrichtungen (TM1BE1, TM1BE2, TM2BE1, TM2BE2) sind, die den einzelnen Teilelektronikeinheiten (TM1LE1, TM2LE1; TM1LE2, TM2LE2) der Antriebsmotore (M1, M2) zugeordnet sind.

9. System nach einem der Ansprüche 1 bis 8, **dadurch gekennzeichnet, dass** die Systemsteuereinheiten (1,2) in die Steuerung und Regelung des Verbrennungsmotors (V) eingreifen.

10. System nach einem der Ansprüche 1 bis 9, **dadurch gekennzeichnet, dass** die Systemsteuereinheiten (1,2) sich untereinander so koordinieren und die Antriebskreise (AK1, AK2, AK3) so ausregeln, dass an allen Antriebsmotoren (M1, M2) eine definierte Leistungs-/Drehmomentvorgabe anliegt.

11. System nach Anspruch 10, **dadurch gekennzeichnet, dass** von den übergeordneten Systemsteuereinheiten (1,2) eine definierte Überlagerungsleistung/ein definiertes Überlagerungsdrehmoment auf einen oder mehrere der Antriebsmotoren (M1, M2) vorgegeben wird.

12. System nach Anspruch 10 oder 11, **dadurch gekennzeichnet, dass** die Systemsteuereinheiten (1,2) von den Antriebsmotoren (M1, M2) bzw. von den ihnen zugeordneten Leistungselektronikeinheiten (M1LE, M2LE) Rückmeldung über die tatsächlich abgegebenen Leistungen/Drehmomente erhalten und entsprechende Regelungen vornehmen.

13. System nach einem der Ansprüche 1 bis 12, **dadurch gekennzeichnet, dass** den einzelnen Antriebskreisen (AK1, AK2, AK3) zugeordnete und versorgungsseitig eingebundene elektrische, energiespeichernde Primärelemente (FB1, FB2), die nur entladen werden können, und/oder Sekundärelemente (FB1, FB2) die Energie aufnehmen und abgeben können, vorgesehen sind.

14. System nach einem der Ansprüche 1 bis 13, **dadurch gekennzeichnet, dass** geeignete elektrisch betriebene Nebenverbraucher (NV1, NV2) wahlweise auf den ersten oder den zweiten usw. Antriebskreis (AK1, AK2, AK3) geschaltet werden.

15. System nach einem der Ansprüche 1 bis 14, **dadurch gekennzeichnet, dass** die Antriebskreise (AK1, AK2, AK3) versorgungsseitig zusammengeschaltet werden, d. h. dass die Stromleitungen zwischen den Teilelektronikeinheiten (TM1LE1, TM2LE1; TM1LE2, TM2LE2; TGLE1, TGLE2) zusammengeschaltet werden.

16. System nach Anspruch 15, **dadurch gekennzeichnet, dass** die elektrischen Bremseinrichtungen (TM1LE1, TM2LE1; TM1LE2, TM2LE2; TGLE1, TGLE2) nach wie vor den einzelnen Antriebskreisen (AK1, AK2, AK3) zugeordnet bleiben und unabhängig, d. h. dem jeweiligen Antriebskreis zugeordnet betrieben werden.

17. System nach Anspruch 15 oder 16, **dadurch gekennzeichnet, dass** geeignete elektrisch betriebene Nebenverbraucher (NV1, NV2) auf die versorgungsseitig zusammengeschalteten Antriebskreise (AK1, AK2, AK3) geschaltet werden.

18. System nach einem der Ansprüche 1 bis 17, **dadurch gekennzeichnet, dass** die Antriebsmotoren (M1, M2) und/oder der Generator (G) mit dauermagnetischer Erregung des Läufers ausgeführt sind.

19. System nach Anspruch 18, **dadurch gekennzeichnet, dass** der dauermagnetisch erregte Läufer mit Flusskonzentration der Dauermagnete und der magnetischen Flussleitteile ausgebildet ist.

## Claims

1. An electric drive system, in particular for vehicles, comprising:
a) at least two drive motors (M1, M2) are subdivided into at least two partial motors (TM11, TM12; TM21, TM22) each;
b) at least one generator (G) driven by a combustion machine (V) is subdivided into at least two partial generators (TG1, TG2);
c) the drive motors (M1, M2) and the generator (G) each have a power electronics unit (M1LE, M2LE, GLE) associated therewith which in turn is subdivided into at least two independent partial electronics units, i.e. first, second, etc. partial electronics units (TM1LE1, TM1LE2; TM2LE1, TM2LE2; TGLE1, TGLE2),
d) there are provided at least two superior system control units (1, 2);
e) the system control units (1, 2) have operating elements (B) connected thereto;
f) the independent partial electronics units (TM1LE1, TM1LE2; TM2LE1, TM2LE2; TGLE1, TGLE2) are associated with the partial motors (TM11, TM12; TM21, TM22) and the partial generators (TG1, TG2) in a correspondence of 1:1 each;
g) the first, second, etc. partial electronics units of the drive motors and of the generator are each connected to form first, second, etc. drive circuits (AK1, AK2, AK3);
g1) each drive circuit (AK1, AK2, AK3) including a plurality of partial motors (TM11, TM21; TM12, TM22), a partial generator (TG1, TG2) and a respective associated partial electronics unit (TM1LE1, TM1LE2; TM2LE1, TM2LE2; TGLE1, TGLE2); and
g2) the system control units (1, 2) being connected to the drive circuits (AK1, AK2, AK4) via control lines (a-g, t-z) or a bus system;
**characterized in that**
h2) the system control units (1, 2) are associated with all drive circuits (AK1, AK2, AK3);
i) the system control units are mutually connected via an information exchange channel (IAK) and contain a detector means (11, 21) for sensing a failure of one or more drive circuits (AK1, AK2, AK3);
k) the system control units (1, 2) each contain direct information connections to the control connections between all other system control units (1, 2) on the one hand and the drive circuits (AK1, AK2, AK3) on the other hand and, in case of failure of one or more system control units (1, 2), also take over the tasks of the same, and
l) the drive circuits (AK1, AK2, AK3), with a given number of drive circuits, are designed for a corresponding fraction of the total power, such that failure of a drive circuit (AK1, AK2, AK3) can be compensated at least in part.

2. The system of claim 1,
**characterized in that** the drive circuits (AK1, AK2, AK3) each have a plurality of input channels, each thereof being connected to a different one of the system control units (1, 2) e.g. via a bus line (BUS1, BUS2).

3. The system of claim 1,
**characterized in that** the superior system control units each have a plurality of control channels (SK1, SK2, SK3) corresponding in number to that of the drive circuits (AK1, AK2, AK3) which in turn have control channels in a number corresponding to that of the system control units, with one control channel each of the first, second, etc. system control units being connected to one control channel of the drive circuits each.

4. The system of any of claims 1 to 3,
**characterized in that** the superior system control units (1, 2) perform control so as to establish a symmetric mode of operation within the individual drive circuits (AK1, AK2, AK3), in which the partial generators (TG1, TG2), the partial motors (TM11, TM12; TM21, TM22) of each drive motor (M1, M2) and the corresponding
partial electronics units (TM1LE1, TM1LE2; TM2LE1, TM2LE2; TGLE1, TGLE2) are each subject to uniform loads.

5. The system of any of claims 1 to 3,
**characterized in that** the system control units control the drive circuits (AK1, AK2, AK3) such that each drive circuit (AK1, AK2, AK3) is in charge of a defined portion of the total power and individual drive circuits are successively turned off and on in accordance with the power demanded.

6. The system of claim 5,
**characterized in that** the system control units (1, 2) permute the association of the drive circuits (AK1, AK2, AK3) with respect to the associated portion of the total power in a time pattern.

7. The system of any of claims 1 to 6,
**characterized in that** the drive circuits (AK1, AK2, AK3) have electric means (TM1BE1, TM1BE2, TM2BE1, TM2BE2) associated therewith for taking up electric energy.

8. The system of claim 7,
**characterized in that** the electric means are brake means (TM1BE1, TM1BE2, TM2BE1, TM2BE2) associated with the individual partial electronics units (TM1LE1, TM1LE2; TM2LE1, TM2LE2; TGLE1, TGLE2) of the drive motors (M1, M2).

9. The system of any of claims 1 to 8,
**characterized in that** the system control units (1, 2) engage in control and regulation of the combustion engine (V).

10. The system of any of claims 1 to 9,
**characterized in that** the system control units (1, 2) are mutually coordinating and regulate the drive circuits (AK1, AK2, AK3) such that a defined power/torque presetting is present at all drive motors (M1, M2).

11. The system of claim 10,
**characterized in that** the superior system control units (1, 2) preset a defined superimposition power / a defined superimposition torque on one or several ones of the drive motors (M1, M2).

12. The system of claim 10 or 11,
**characterized in that** the system control units (1, 2) receive feedback information from the drive motors (M1, M2) or the power electronics units (M1LE, M2LE) associated therewith, on the actually issued powers/torques, and perform corresponding regulating operations.

13. The system of any of claims 1 to 12,
**characterized in that** there are provided electric, energy-storing primary elements (FB1, FB2), that can be discharged only, and/or secondary elements (FB1, FB2), that can take up and discharge energy, in association with the individual drive circuits and embedded on the supply side.

14. The system of any of claims 1 to 11,
**characterized in that** suitable electrically operated additional consumers (NV1, NV2) are selectively connected to the first or second etc. drive circuits (AK1, AK2, AK3).

15. The system of any of claims 1 to 14,
**characterized in that** the drive circuits (AK1, AK2, AK3) are interconnected on the supply side, i.e. the current lines between the partial electronics units (TM1LE1, TM1LE2; TM2LE1, TM2LE2; TGLE1, TGLE2) are interconnected.

16. The system of claim 15,
**characterized in that** the electric brake means (TM1BE1, TM1BE2, TM2BE1, TM2BE2) still remain associated with the individual drive circuits (AK1, AK2, AK3) and are operated independently, i.e. in association with the respective drive circuit.

17. The system of claim 15 or 16,
**characterized in that** suitable electrically operated additional consumers (NV1, NV2) are connected to the drive circuits (AK1, AK2,
AK3) that are interconnected on the supply side.

18. The system of any of claims 1 to 17,
**characterized in that** the drive motors (M1, M2) and/or the generator (G) are designed with permanent-magnetic excitation of the rotor.

19. The system of claim 18,
**characterized in that** the rotor with permanent-magnetic excitation is designed with flux concentration of the permanent magnets and the magnetic flux conduction parts.

## Revendications

1. Système d'entraînement électrique, en particulier pour des véhicules, comportant les caractéristiques suivantes:
a) au moins deux moteurs d'entraînement (M1, M2) sont respectivement divisés en au moins deux moteurs partiels (TM11, TM12 ; TM21, TM22) ;
b) au moins un générateur (G) entraîné par un moteur à combustion interne (V) est divisé en au moins deux générateurs partiels (TG1, TG2) ;
c) est affectée aux moteurs d'entraînement (M1, M2) et au générateur (G) respectivement une unité électronique de puissance (M1LE, M2LE, GLE), laquelle est de son côté divisée en au moins deux unités électroniques partielles indépendantes, donc une première unité électronique partielle, une deuxième unité électronique partielle, etc. (TM1LE1, TM1LE2 ; TM2LE1, TM2LE2 ; TGLE1, TGLE2) ;
d) sont présentes au moins deux unités de contrôle système (1, 2) principales ;
e) des éléments de commande (B) sont reliés aux unités de contrôle système (1, 2) ;
f) les unités électroniques partielles (TM1LE1, TM1LE2 ; TM2LE1, TM2LE2 ; TGLE1, TGLE2) indépendantes sont respectivement affectées selon une correspondance 1:1 aux moteurs partiels (TM11, TM12 ; TM21, TM22) et aux générateurs partiels TG1, TG2) ;
g) la première, la deuxième unité électronique partielle, etc. des moteurs d'entraînement et du générateur sont respectivement reliées aux fins de la formation d'un premier, d'un deuxième, etc. circuit d'entraînement (AK1, AK2, AK3),
g1) dans lequel plusieurs moteurs partiels (TM11, TM21 ; TM12, TM22), un générateur partiel (TG1, TG2) et une unité électronique partielle respectivement affectée (TM1LE1, TM2LE1 ; TM1LE2, TM2LE2 ; TGLE1, TGLE2) font partie de chaque circuit d'entraînement (AK1, AK2, AK3) ; et
g2) dans lequel les unités de contrôle système (1, 2) sont reliées aux circuits d'entraînement (AK1, AK2, AK3) par l'intermédiaire de conduites de contrôle (a-g, t-z) ou par l'intermédiaire d'un système de bus ;
**caractérisé en ce que**
h2) les unités de contrôle système (1, 2) sont affectées à tous les circuits d'entraînement (AK1, AK2, AK3) ;
i) les unités de contrôle système (1, 2) sont reliées les unes aux autres par l'intermédiaire d'une voie d'échange d'informations (IAK) et comportent un dispositif de détection (11, 21) servant à détecter une défaillance d'un ou de plusieurs circuits d'entraînement (AK1, AK2, AK3) ;
k) les unités de contrôle système (1, 2) présentent respectivement des liaisons d'informations directes aux liaisons de contrôle entre toutes les autres unités de contrôle système (1, 2) d'un coté et les circuits d'entraînement (AK1, AK2 ; AK3) de l'autre côté et reprennent, en cas de défaillance d'une ou de plusieurs unités de contrôle système (1, 2), les fonctions de ces dernières, et
l) les circuits d'entraînement (AK1, AK2, AK3) sont configurés dans le cas d'un nombre donné de circuits d'entraînement pour une fraction correspondante de la puissance globale de telle manière que la défaillance d'un circuit d'entraînement (AK1, AK2, AK3) peut être compensée au moins partiellement.

2. Système selon la revendication 1, **caractérisé en ce que** les circuits d'entraînement (AK1, AK2, AK3) présentent respectivement plusieurs voies d'entrée, parmi lesquelles chacune est reliée à une autre unité de contrôle système (1, 2) par exemple par l'intermédiaire d'une ligne de bus (BUS1, BUS2).

3. Système selon la revendication 1, **caractérisé en ce que** les unités de contrôle système principales présentent plusieurs voies de contrôle (SK1, SK2, SK3) dont le nombre correspond à celui des circuits d'entraînement (AK1, AK2, AK3), lesquels présentent de leur côté des voies de contrôle en une quantité identique à celle des unités de contrôle système, dans lequel chaque voie de contrôle de la première, deuxième, etc. unité de contrôle système est reliée à respectivement une voie de contrôle des circuits d'entraînement.

4. Système selon l'une quelconque des revendications 1 à 3, **caractérisé en ce que** les unités de contrôle système (1, 2) principales régulent à l'intérieur des divers circuits d'entraînement (AK1, AK2, AK3) un mode de fonctionnement symétrique, dans le cadre duquel les générateurs partiels (TG1, TG2), les moteurs partiels (TM11, TM12 ; TM21, TM22) de chaque moteur d'entraînement (M1, M2) et les unités électroniques partielles (TM1LE1, TM1LE2, TM2LE1, TM2LE2, TGLE1, TGLE2) sont respectivement chargés de la même manière.

5. Système selon l'une quelconque des revendications 1 à 3, **caractérisé en ce que** les unités de contrôle système contrôlent de telle manière les circuits d'entraînement (AK1, AK2, AK3) que chaque circuit d'entraînement (AK1, AK2, AK3) est en charge d'une partie définie de la puissance globale, et **en ce que** divers circuits d'entraînement sont successivement mis en marche et mis hors circuit conformément à la puissance demandée.

6. Système selon la revendication 5, **caractérisé en ce que** les unités de contrôle système (1, 2) permutent l'affectation des circuits d'entraînement (AK1, AK2, AK3) à la partie associée de la puissance globale en un modèle temporel.

7. Système selon l'une quelconque des revendications 1 à 6, **caractérisé en ce que** des dispositifs électriques (TM1BE1, TM1BE2, TM2BE1, TM2BE2) servant à recevoir l'énergie électrique sont affectés aux circuits d'entraînement (AK1, AK2, AK3).

8. Système selon la revendication 7, **caractérisé en ce que** les dispositifs électriques sont des dispositifs de freinage (TM1BE1, TM1BE2, TM2BE1, TM2BE2), qui sont affectés aux diverses unités électroniques partielles (TM1LE1, TM2LE1; TM1LE2, TM2LE2) des moteurs d'entraînement (M1, M2).

9. Système selon l'une quelconque des revendications 1 à 8, **caractérisé en ce que** les unités de contrôle système (1, 2) interviennent dans le contrôle et la régulation du moteur à combustion interne (V).

10. Système selon l'une quelconque des revendications 1 à 9, **caractérisé en ce que** les unités de contrôle système (1, 2) sont coordonnées entre elles de telle manière et régulent les circuits d'entraînement (AK1, AK2, AK3) de telle manière qu'une spécification définie en matière de puissance/de couple est présente pour tous les moteurs d'entraînement (M1, M2).

11. Système selon la revendication 10, **caractérisé en ce qu'**une puissance de superposition définie/un couple de superposition défini sont prédéfinis sur un ou plusieurs moteurs d'entraînement (M1, M2) par les unités de contrôle système (1, 2) principales.

12. Système selon la revendication 10 ou 11, **caractérisé en ce que** les unités de contrôle système (1, 2) reçoivent des moteurs d'entraînement (M1, M2) ou des unités électroniques de puissance affectées à ces derniers (M1LE, M2LE) un retour quant aux puissances/couples réellement fournis, et entreprennent des réglages correspondants.

13. Système selon l'une quelconque des revendications 1 à 12, **caractérisé en ce que** sont prévus des éléments primaires (FB1, FB2) électriques accumulateurs d'énergie affectés aux divers circuits d'entraînement (AK1, AK2, AK3) et liés côté alimentation, lesquels éléments primaires ne peuvent être que déchargés, et/ou des éléments secondaires (FB1, FB2), qui peuvent absorber et émettre de l'énergie.

14. Système selon l'une quelconque des revendications 1 à 13, **caractérisé en ce que** des consommateurs auxiliaires (NV1, NV2) électriques appropriés sont commutés au choix sur le premier ou le deuxième, etc. circuit d'entraînement (AK1, AK2, AK3).

15. Système selon l'une quelconque des revendications 1 à 14, **caractérisé en ce que** les circuits d'entraînement (AK1, AK2, AK3) sont interconnectés côté alimentation, c'est-à-dire que les conduites de courant sont interconnectées entre les unités électroniques partielles (TM1LE1, TM2LE1; TM1LE2, TM2LE2 ; TGLE1, TGLE2).

16. Système selon la revendication 15, **caractérisé en ce que** les dispositifs de freinage (TM1BE1, TM1BE2, TM2BE1, TM2BE2) électriques restent affectés comme avant aux divers circuits d'entraînement (AK1, AK2, AK3) et fonctionnent indépendamment, c'est-à-dire de manière affectée au circuit d'entraînement respectif.

17. Système selon la revendication 15 ou 16, **caractérisé en ce que** des consommateurs auxiliaires (NV1, NV2) électriques appropriés sont commutés sur les circuits d'entraînement (AK1, AK2, AK3) interconnectés côté alimentation.

18. Système selon l'une quelconque des revendications 1 à 17, **caractérisé en ce que** les moteurs d'entraînement (M1, M2) et/ou le générateur (G) sont réalisés avec une excitation par aimant permanent du rotor.

19. Système selon la revendication 18, **caractérisé en ce que** le rotor à excitation par aimant permanent est réalisé avec une concentration de flux des aimants permanents et des éléments conducteurs de flux magnétiques.
